(19) Europäisches Patentamt
European Patent Office
Office européen des brevets

(11) **EP 4 340 445 A1**

(12) **EUROPEAN PATENT APPLICATION**
published in accordance with Art. 153(4) EPC

(43) Date of publication:
**20.03.2024 Bulletin 2024/12**

(21) Application number: **22807027.2**

(22) Date of filing: **01.02.2022**

(51) International Patent Classification (IPC):
**H04W 28/26** (2009.01)     **H04W 88/18** (2009.01)
**H04L 47/80** (2022.01)

(52) Cooperative Patent Classification (CPC):
**H04L 47/80; H04W 16/04; H04W 24/08;**
**H04W 28/26; H04W 88/08; H04W 88/18**

(86) International application number:
**PCT/JP2022/003872**

(87) International publication number:
**WO 2022/239320 (17.11.2022 Gazette 2022/46)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **11.05.2021 JP 2021080489**

(71) Applicant: KDDI Research, Inc.
**Fujimino-shi, Saitama 356-8502 (JP)**

(72) Inventors:
• **HIRAYAMA Haruhisa**
  **Fujimino-shi, Saitama 356-8502 (JP)**
• **NANBA Shinobu**
  **Fujimino-shi, Saitama 356-8502 (JP)**
• **SHINBO Hiroyuki**
  **Fujimino-shi, Saitama 356-8502 (JP)**

(74) Representative: **Krauns, Christian**
  **Wallinger Ricker Schlotter Tostmann**
  **Patent- und Rechtsanwälte Partnerschaft mbB**
  **Zweibrückenstraße 5-7**
  **80331 München (DE)**

(54) **CONTROL DEVICE, RESOURCE ALLOCATION CONTROL METHOD, AND COMPUTER PROGRAM**

(57)    A control device controlling allocation of resources in a radio access network includes: a resource usage rate acquiring unit configured to acquire a resource usage rate for each service; a total received data volume information acquiring unit configured to acquire total received data volume information indicating a total received data volume for each service received by user equipment via an interface with a base station; a total traffic volume information acquiring unit configured to acquire total traffic volume information indicating a total traffic volume for each service for the user equipment in the base station via the interface with the base station; a communication quality degradation degree calculating unit configured to calculate a degree of degradation of communication quality indicating a degree of degradation of a throughput based on a ratio of the total received data volume to the total traffic volume for each service; and a control unit configured to control a margin for a requested amount of resources on the basis of the resource usage rate and the degree of degradation of communication quality in the past for each service.

FIG. 2

EP 4 340 445 A1

**Description**

TECHNICAL FIELD

The present invention relates to a control device, a resource allocation control method, and a computer program.
Priority is claimed on Japanese Patent Application No. 2021-80489, filed May 11, 2021, the content of which is incorporated herein by reference.

BACKGROUND ART

When various services are accommodated in a radio access network (RAN) such as a fifth-generation (5G) mobile communication system (hereinafter referred to as a 5G system), the same resources (such as radio resources, computer resources, and transmission path resources) cannot be used simultaneously for a plurality of services. Accordingly, resources necessary for each service have to be secured to guarantee communication quality of the service. Here, services can be bundled, for example, in units of 5G QoS indicators (5QIs) or sub network slice selection assist information (S-NSSAI, identifiers of RAN slices).
In each service, resources allocated to the service are allocated to user equipment (UE). At this time, requirements in communication quality for the service can be satisfied when the amount of resources allocated to the service is sufficient, but the requirements in communication quality for the service cannot be satisfied for the UE when the amount of resources allocated to the service is deficient. The amount of resources necessary for each service varies according to radio quality of UEs using the service or traffic. Accordingly, in order to secure communication quality of services, the amount of resources necessary for each service is periodically estimated, and control is performed such that allocation of resources to each service is changed.
For example, a technique described in Non-Patent Document 1 is known as a technique for securing communication quality of a service. In the technique described in Non-Patent Document 1, when resources are allocated to services, allocation of radio resources to the service is controlled using radio quality information and necessary traffic information.
In Non-Patent Document 2, parameters which can be collected in the 5G system are prescribed.

[Prior Art Documents]

[Non-Patent Document]

[Non-Patent Document 1]
B. Khodapanah, A. Awada, I. Viering, D. Oehmann, Meryem Simsek, and G. P. Fettweis, "Fulfillment of Service Level Agreements via Slice-Aware Radio Resource Management in 5G Networks," 2018 IEEE 87th Vehicular Technology Conference (VTC Spring), pp. 1-6, Jun. 2018
[Non-Patent Document 2]
3GPP, "TS 28.552," V17.1.0, 2020-12

SUMMARY OF INVENTION

[Problems to be Solved by the Invention]

However, in the technique described in Non-Patent Document 1, an error may be caused between the amount of resources allocated to a service and the amount of resources actually necessary for the service, and efficient allocation of resources may not be performed. For example, degradation in communication quality may occur due to instantaneous shortage of resources in a certain service, but in another service, all resources allocated thereto may not be used and some may be left unused.
The present invention was made in consideration of the aforementioned circumstances and an objective thereof is to achieve efficient allocation of resources while curbing degradation in communication quality when allocation of resources in a radio access network to services accommodated in the radio access network is controlled.

[Means for Solving the Problems]

According to an aspect of the present invention, there is provided a control device controlling allocation of resources in a radio access network to each of services accommodated in the radio access network, the control device including: a resource usage rate acquiring unit configured to acquire a resource usage rate indicating a usage rate of the resources for each service; a total received data volume information acquiring unit configured to acquire total received data volume information indicating a total received data volume for each service received by user equipment via an interface with a base station; a total traffic volume information acquiring unit configured to acquire total traffic volume information indicating a total traffic volume for each service for the user equipment in the base station via the interface with the base station; a communication quality degradation degree calculating unit configured to calculate a degree of degradation of communication quality indicating a degree of degradation of a throughput based on a ratio of the total received data volume to the total traffic volume for each service; and a control unit configured to control a margin for a requested amount of resources on the basis of the resource usage rate and the degree of degradation of communication quality in the past for each service.

In the control device according to the aspect of the present invention, the control unit may control the margin for the requested amount of resources for each service such that the margin for the service in which the resource usage rate in the past is low is decreased and the margin for the service in which the degree of degradation of communication quality in the past is high is increased.

According to another aspect of the present invention, there is provided a resource allocation control method that is performed by a control device controlling allocation of resources in a radio access network to each of services accommodated in the radio access network, the resource allocation control method including: a resource usage rate acquiring step of causing the control device to acquire a resource usage rate indicating a usage rate of the resources for each service; a total received data volume information acquiring step of causing the control device to acquire total received data volume information indicating a total received data volume for each service received by user equipment via an interface with a base station; a total traffic volume information acquiring step of causing the control device to acquire total traffic volume information indicating a total traffic volume for each service for the user equipment in the base station via the interface with the base station; a communication quality degradation degree calculating step of causing the control device to calculate a degree of degradation of communication quality indicating a degree of degradation of a throughput based on a ratio of the total received data volume to the total traffic volume for each service; and a control step of causing the control device to control a margin for a requested amount of resources on the basis of the resource usage rate and the degree of degradation of communication quality in the past for each service.

According to another aspect of the present invention, there is provided a computer program causing a computer of a control device controlling allocation of resources in a radio access network to each of services accommodated in the radio access network to perform: a resource usage rate acquiring step of acquiring a resource usage rate indicating a usage rate of the resources for each service; a total received data volume information acquiring step of acquiring total received data volume information indicating a total received data volume for each service received by user equipment via an interface with a base station; a total traffic volume information acquiring step of acquiring total traffic volume information indicating a total traffic volume for each service for the user equipment in the base station via the interface with the base station; a communication quality degradation degree calculating step of calculating a degree of degradation of communication quality indicating a degree of degradation of a throughput based on a ratio of the total received data volume to the total traffic volume for each service; and a control step of controlling a margin for a requested amount of resources on the basis of the resource usage rate and the degree of degradation of communication quality in the past for each service.

[Advantageous Effects of Invention]

According to the present invention, it is possible to achieve efficient allocation of resources while curbing degradation in communication quality when allocation of resources in a radio access network to services accommodated in the radio access network is controlled.

BRIEF DESCRIPTION OF DRAWINGS

FIG. 1 is a block diagram illustrating an example of a configuration of a radio access network according to an embodiment.
FIG. 2 is a block diagram illustrating an example of a configuration of a control node according to the embodiment.
FIG. 3 is a flowchart illustrating the entire routine of a resource allocation control method according to the embodiment.
FIG. 4 is a diagram illustrating an example of definition of parameters according to the embodiment.
FIG. 5 is an explanatory diagram illustrating a specific example of resource allocation control according to the embodiment.

FIG. 6 is an explanatory diagram illustrating a specific example of resource allocation control according to the embodiment.

FIG. 7 is an explanatory diagram illustrating a specific example of resource allocation control according to the embodiment.

FIG. 8 is a graph illustrating an example of temporal change of a margin correction factor according to the embodiment.

EMBODIMENTS FOR CARRYING OUT THE INVENTION

Hereinafter, an embodiment of the present invention will be described with reference to the accompanying drawings.

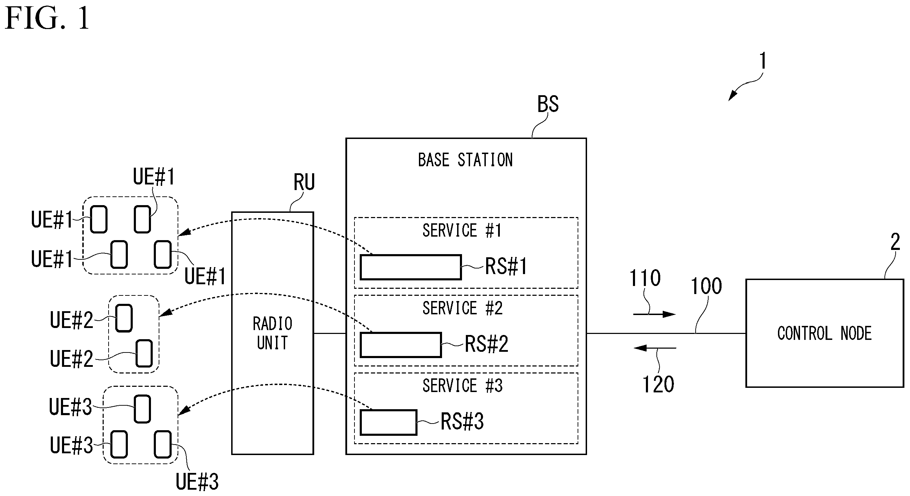

FIG. 1 is a block diagram illustrating an example of a configuration of a radio access network according to an embodiment. In FIG. 1, a radio access network (RAN) 1 includes a radio unit RU, a base station BS, and a control node 2. The base station BS accommodates one or more services (service #1, service #2, and service #3 in the example illustrated in FIG. 1) out of a plurality of services accommodated in the RAN 1. Examples of the services include a 4K video transmission service and a communication service for connected cars. The control node 2 controls one or more base stations BS.

The control node 2 controls allocation of resources in the RAN 1 for each service accommodated in the RAN 1. The control node 2 acquires various types of information 110 from the base station BS via an interface 100 with the base station BS. The control node 2 controls allocation of resources to the services (service #1, service #2, and service #3) accommodated in the base station BS on the basis of the information 110 acquired from the base station BS. The resources allocated to the services include radio resources of the RAN 1, computer resources, and transmission path resources.

The control node 2 notifies the base station BS of resource allocation result information 120 indicating a result of allocation of resources to the services (service #1, service #2, and service #3) via the interface 100. Accordingly, the base station BS performs allocation of resources to the services (service #1, service #2, and service #3) (allocation of resource RS#1 to service #1, allocation of resource RS#2 to service #2, and allocation of resource RS#3 to service #3).

The base station BS communicates with user equipment (UE) (UE#1, UE#2, and UE#3) which uses the services (service #1, service #2, and service #3) via the radio unit RU. UE#1 is UE which uses service #1. UE#2 is UE which uses service #2. UE#3 is UE which uses service #3.

The resources (resource RS#1, resource RS#2, and resource RS#3) allocated to the services (service #1, service #2, and service #3) are allocated to the UE (UE#1, UE#2, and UE#3). Resource RS#1 is a resource allocated to service #1. Resource RS#2 is a resource allocated to service #2. Resource RS#3 is a resource allocated to service #3.

The UE (UE#1, UE#2, and UE#3) uses the services (service #1, service #2, and service #3) using the resources allocated thereto.

The RAN 1 may be a RAN to which RAN slicing technology is applied. For example, the RAN 1 may be a 5G system. Services according to this embodiment may be bundled, for example, in units of 5QI or S-NSSAI.

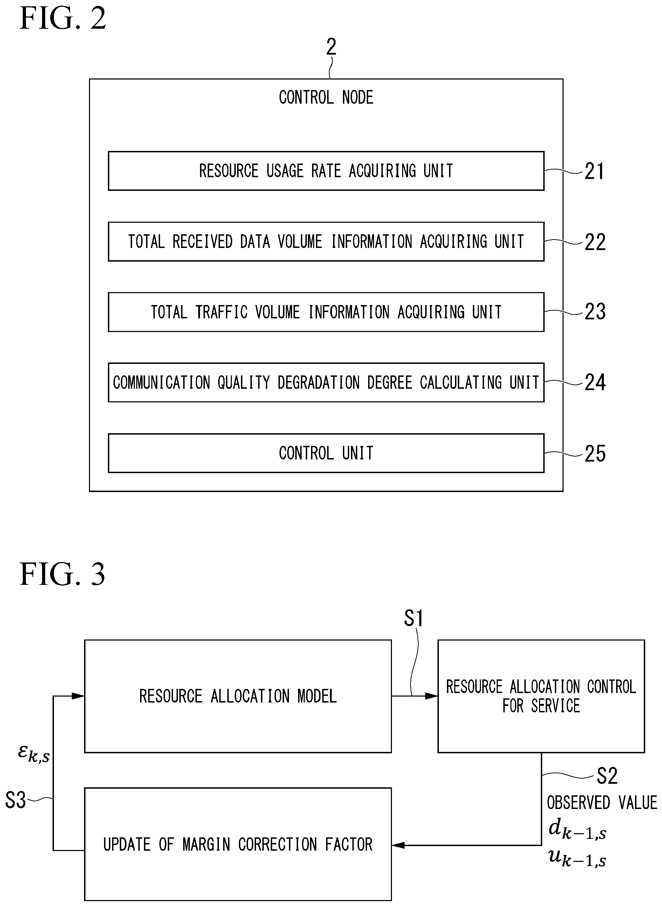

FIG. 2 is a block diagram illustrating an example of a configuration of the control node according to the embodiment. In FIG. 2, the control node 2 (a control device) includes a resource usage rate acquiring unit 21, a total received data volume information acquiring unit 22, a total traffic volume information acquiring unit 23, a communication quality degradation degree calculating unit 24, and a control unit 25. The control node 2 in the embodiment corresponds to a control device.

The constituents units of the control node 2 realize functions thereof by causing a central processing unit (CPU) to execute a computer program for realizing the functions of the constituent units.

The resource usage rate acquiring unit 21 acquires a resource usage rate for each service. The resource usage rate acquiring unit 21 acquires resource usage rates of the services (service #1, service #2, and service #3) from the base station BS via the interface 100. For example, the resource usage rate of service #1 is a ratio of resources used for service #1 to resources allocated to service #1. For example, a physical resource block (PRB) usage rate for each distributed unit (DU) may be used as the resource usage rate. The PRB usage rate for each DU is defined in Non-Patent Document 2 in correlation with the interface 100 with the base station BS.

The total received data volume information acquiring unit 22 acquires total received data volume information indicating a total received data volume for each service received by the UE via the interface 100. The total received data volume information acquiring unit 22 acquires total received data volume information of the services (service #1, service #2, and service #3) from the base station BS via the interface 100. For example, the total received data volume information of service #1 is information indicating a total received data volume of service #1 received by UE#1 out of all the UEs using service #1 as counting targets.

The total traffic volume information acquiring unit 23 acquires total traffic volume information indicating a total traffic volume for each service to the UE in the base station BS via the interface 100. The total traffic volume information acquiring unit 23 acquires total traffic volume information of the services (service #1, service #2, and service #3) from the base station BS via the interface 100. For example, the total traffic volume information of service #1 is information indicating a total traffic volume of service #1 to UE#1 observed by the base station BS out of all the UEs using service #1 as observation targets.

The communication quality degradation degree calculating unit 24 calculates a degree of degradation of communication quality for each service. In this embodiment, the degree of degradation of communication quality is information indicating a degree of degradation of a throughput. The communication quality degradation degree calculating unit 24 calculates the degree of degradation of communication quality indicating a degree of degradation of a throughput based on a ratio of the total received data volume to the total traffic volume for each service. The communication quality degradation degree calculating unit 24 calculates the degree of degradation of communication quality indicating the degree of degradation of a throughput of each of the services (service #1, service #2, and service #3) using the total received data volume information and the total traffic volume information for each of the services (service #1, service #2, and service #3) which are accommodated in the base station BS.

The control unit 25 controls allocation of resources in the RAN 1 for each service. When allocation of resources in the RAN 1 for each service is controlled, the control unit 25 controls a margin for a requested amount of resources on the basis of the resource usage rate and the degree of degradation of communication quality in the past for each service.

A resource allocation control method according to this embodiment will be described below.

The entire routine of the resource allocation control method according to the embodiment will be described with reference to FIG. 3. FIG. 3 is a flowchart illustrating the entire routine of the resource allocation control method according to the embodiment.

Parameters associated with the resource allocation control method according to the embodiment are defined by Expression (1). In the following description, for example, "a" which a subscript or a superscript may be described "_a."
[Math. 1]

$$k: \text{ time step of resource allocation control}$$

$$s: \text{ service number}$$

$$\widehat{\Omega}_{k,s}: \text{ amount of resources allocated to service } s \text{ at time step } k$$

$$\omega_{k,s}: \text{ requested amount of resources for service } s \text{ at time step } k \text{ estimated from radio}$$

$$\text{quality } c_{k-1,s} \text{ and traffic volume } v_{k-1,s}$$

$$\varepsilon_{k,s}: \text{ margin correction factor of requested amount of resources } \omega_{k,s} \text{ at time step } k$$

$$d_{k,s}: \text{ degree of degradation of communication quality for each service at time step } k$$

$$u_{k,s}: \text{ resource usage rate for each service at time step } k$$

$$\widehat{u}_k: \text{ average value of resource usage rates } u_{k,s} \text{ of all services at time step } k$$

$$\widehat{d}_k: \text{ average value of degrees of degradation of communication quality } d_{k,s} \text{ of all}$$

$$\text{services at time step } k \ \dots (1)$$

Here, k is a time step number for identifying a time step at which resource allocation control is performed.

In addition, s is a service number for identifying a service.

$\Omega\_^\_{k,s}$ is the amount of resources allocated to a service s attime step k.

$\omega$_k,s is a requested amount of resources of the service s at time step k. The requested amount of resources co_k,s is a value which is estimated from the radio quality C_k-1,s and the traffic volume V_k-1,s of the service s at time step (k-1)

$\varepsilon$_k,s is a margin correction factor for the requested amount of resources $\omega$_k,s of the service s at time step k.

d_k,s is a degree of degradation of communication quality of the service s at time step k.

u_k,s is a resource usage rate of the service s at time step k.

u_^_k is an average value of the resource usage rates u_k,s of all the services at time step k.

d_^_k is an average value of the degrees of degradation of communication quality d_k,s of all the services at time step k.

In FIG. 3, the amount of resources allocated to the service s $\Omega$_^_k,s at time step k is calculated using the margin correction factor $\varepsilon$_k,s of the service s at time step k. The margin correction factor $\varepsilon$_k,s for the service s at time step k is calculated using the degrees of degradation of communication quality ("d_k-1,s," "d_k-2,s," ...) and the resource usage rates ("u_k-1,s," "u_k-2,s," ...) of the service s at past time steps (k-1, k-2, ...) prior to time step k. Accordingly, the amount of resources allocated to the service s $\Omega$_^_k,s is controlled on the basis of the degrees of degradation of communication quality and the resource usage rates of the service s in the past resource allocation results of the service s in a feedback manner.

(Step S1) The control unit 25 calculates the amount of allocated resources at time step k for each service s $\Omega$_^_k,s using a resource allocation model for each service s. The resource allocation model for each service s is expressed by Expression (2).

[Math. 2]

$$\widehat{\Omega_{k,s}} = \varepsilon_{k,s}\omega_{k,s}\left(C_{k-1,s}, V_{k-1,s}\right) \qquad \cdots (2)$$

The amount of resources allocated to the service s at time step k $\Omega$_^_k,s is calculated by multiplying the requested amount of resources for the service s at time step k $\omega$_k,s by the margin correction factor for the service s at time step k $\varepsilon$_k,s.

(Step S2) The amount of resources allocated to each service s $\Omega$_^_k,s calculated in Step S1) is notified from the control node 2 to the base station BS using the resource allocation result information 120, and allocation of resources to each service s is updated. The degree of degradation of communication quality of the service s d_k,s and the resource usage rate u_k,s observed as a result are acquired. Here, for the purpose of convenience of explanation, the observed values are a degree of degradation of communication quality d_k-1,s and the resource usage rate u_k-1,s observed as the result of update of the allocation of resources at time step (k-1) as illustrated in FIG. 3.

(Step S3) The control unit 25 calculates the margin correction factor $\varepsilon$_k,s of the service s at next time step k using the degree of degradation of communication quality d_k-1,s and the resource usage rate u_k-1,s at time step (k-1). The margin correction factor k $\varepsilon$_k,s is expressed by Expression (3).

[Math. 3]

$$\varepsilon_{k,s} = g\left(d_{k-1,s}, u_{k-1,s}, \varepsilon_{k-1,s}, \varepsilon_{k-2,s}, ...\right) \qquad \cdots (3)$$

The margin correction factor for the service s at time step k $\varepsilon$_k,s calculated in Step S3 is used to calculate the amount of resources allocated to the service s at time step k s $\Omega$_^_k,s (Step S1, Expression (2)).

Steps S 1 to S3 are repeatedly performed.

In the resource allocation control method according to the embodiment, with a focus on a trade-off relationship between the amount of unused resources and the degradation of communication quality, feedback control for allocating resources including an appropriate margin to the services is performed using information on both sides. With a focus on different delays necessary for the services and different appropriate margins between the services, a margin adapted to each service is provided.

(Method of calculating margin correction factor)

A method of calculating the margin correction factor $\varepsilon$_k,s will be described below. The margin correction factor $\varepsilon$_k,s is expressed by Expression (4), Expression (5), Expression (6), and Expression (7).

[Math. 4]

If $d_{k-1,s} < d_{th,s}$ in all services

$$\varepsilon_{k,s} = \left\{1 + \sigma^{\mathrm{bal\_u},s}\big(u_{k-1,s} - \widehat{u_{k-1}}\big)\right\}E_{k,s} \qquad \cdots \quad (4)$$

[Math. 5]

If $d_{k-1,s} < d_{th,s}$ in some services

$$\varepsilon_{k,s} = \begin{cases} \varepsilon_{k-1,s} & (\text{when } u_{k-1,s} > u_{th,s} \text{ and } d_{k-1,s} < d_{th,s}) & \cdots (5a) \\ \big(1 + \sigma^{\mathrm{inc},s} d_{k-1,s}\big)E_{k,s} & ( \quad u_{k-1,s} > u_{th,s} \text{ and } d_{k-1,s} > d_{th,s}) & \cdots (5b) \\ \big(1 - \sigma^{\mathrm{dec},s}(1 - u_{k-1,s})\big)E_{k,s} & (\text{when } u_{k-1,s} < u_{th,s}) & \cdots (5c) \end{cases}$$

$$\cdots \quad (5)$$

[Math. 6]

If $d_{k-1,s} > d_{th,s}$ in all services

$$\varepsilon_{k,s} = \left\{1 + \sigma^{\mathrm{bal\_d},s}\big(d_{k-1,s} - \widehat{d_{k-1}}\big)\right\}E_{k,s} \qquad \cdots \quad (6)$$

[Math. 7]

$$E_{k,s} = \sum_{i=1}^{n} \frac{\varepsilon_{k-i,s}}{n} \qquad \cdots \quad (7)$$

In Expression (4), Expression (5), and Expression (6), E_k,s is a moving average value of the margin correction factors ε_k,s in n time steps "(k-n) to (k-1)" in the past as expressed by Expression (7). Here, n is set in advance.

Expression (4) is used when the degrees of degradation of communication quality d_k-1,s in all the services s are less than the threshold value d_th,s. In this case, the margin correction factor ε_k,s is adjusted according to a difference between the resource usage rate u_k-1,s and the average value of the resource usage rates u_^_k-1 using Expression (4). Accordingly, the difference of the resource usage rate between the services is decreased.

Expression (5) is used when the degrees of degradation of communication quality d_k-1,s in some services s are less than the threshold values d_th,s. In this case, the margin correction factor ε_k,s is adjusted for each case (5a, 5b, and 5c) using Expression (5).

When "the resource usage rate u_k-1,s is higher than the threshold value u_th,s and the degree of degradation of communication quality d_k-1,s is less than the threshold value d_th,s," the previous margin correction factor ε_k-1,s is used as the margin correction factor ε_k,s without any change using Expression (5a). This is because it can be determined that an appropriate margin is secured for the requested amount of resources ω_k-1,s.

When "the resource usage rate u_k-1,s is higher than the threshold value u_th,s and the degree of degradation of communication quality d_k-1,s is greater than the threshold value d_th,s," the margin correction factor ε_k,s is adjusted according to the degree of degradation of communication quality d_k-1,s using Expression (5b). Accordingly, a margin for the requested amount of resources co_k,s is increased in a service s of which the degree of degradation of communication quality d_k-1,s is great.

When "the resource usage rate u_k-1,s is lower than the threshold value u_th,s," the margin correction factor ε_k,s is adjusted according to the resource usage rate u_k-1,s using Expression (5c). Accordingly, a margin for the requested amount of resources ω_k,s is decreased in a service s of which the resource usage rate u_k-1,s is low.

Expression (6) is used when the degrees of degradation of communication quality d_k-1,s in all services s are greater than the threshold values d_th,s. In this case, the margin correction factor ε_k,s is adjusted according to the difference between the degree of degradation of communication quality d_k-1,s and the average d_^_k-1 of the degree of degradation of communication quality using Expression (6). Accordingly, the difference of the degree of degradation of communication quality between the services is decreased.

With the resource allocation control method according to this embodiment, control can be performed such that the margin for the requested amount of resources decreases in a service in which the resource usage rate in the past is low and the margin for the requested amount of resources increases in a service in which the degree of degradation of communication quality in the past is great. Accordingly, it is possible to effectively use resources left unused in some services for other services and to curb degradation of communication quality.

(Method of calculating degree of degradation of communication quality)

In this embodiment, a degree of degradation of a throughput is calculated as the degree of degradation of communication quality. The degree of degradation of a throughput is calculated as a value based on a ratio of the total received data volume to the total traffic volume. Accordingly, the total received data volume and the total traffic volume of each service are used to calculate the degree of degradation of a throughput. However, regarding the interface 100 with the base station BS, a total traffic volume for each service is defined in existing interfaces described in Non-Patent Document 2, but a total received data volume for each service is not defined. Accordingly, with the existing interfaces, the total traffic volume information of each service can be acquired, but the total received data volume information of each service cannot be acquired. As a result, definition of the total received data volume of each service is added regarding the interface 100 with the base station BS.

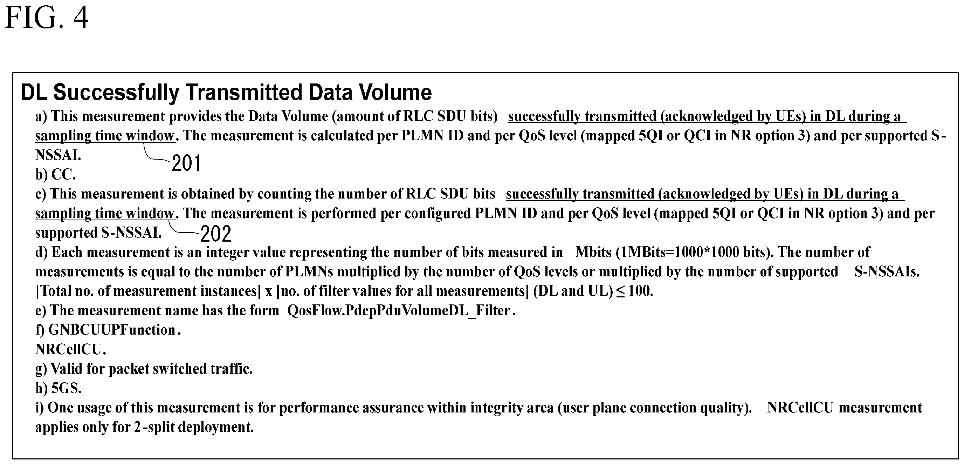

FIG. 4 is a diagram illustrating an example of definition of parameters according to the embodiment. Additions (underlined parts in FIG. 4) 201 and 202 to the definition of Non-Patent Document 2 are illustrated in FIG. 4. Specifically, a total received data volume for each service identifier (5QI, QCI, S-NSSAI) in a designated time window is added. Through this addition of definition, the control node 2 can acquire the total received data volume information of each service via the interface 100.

The degree of degradation of communication quality d_k-1,s indicating a degree of degradation of a throughput at time step (k-1) is calculated by Expression (8) using the total received data volume and the total traffic volume ta time step (k-1) of a service s (a target service) of which the degree of degradation of communication quality is to be calculated. [Math. 8]

$$d_{k-1,s} = 1 - (\text{"total received data volume of target service"} / \text{"total traffic volume}$$

$$\text{of target service"}) \dots (8)$$

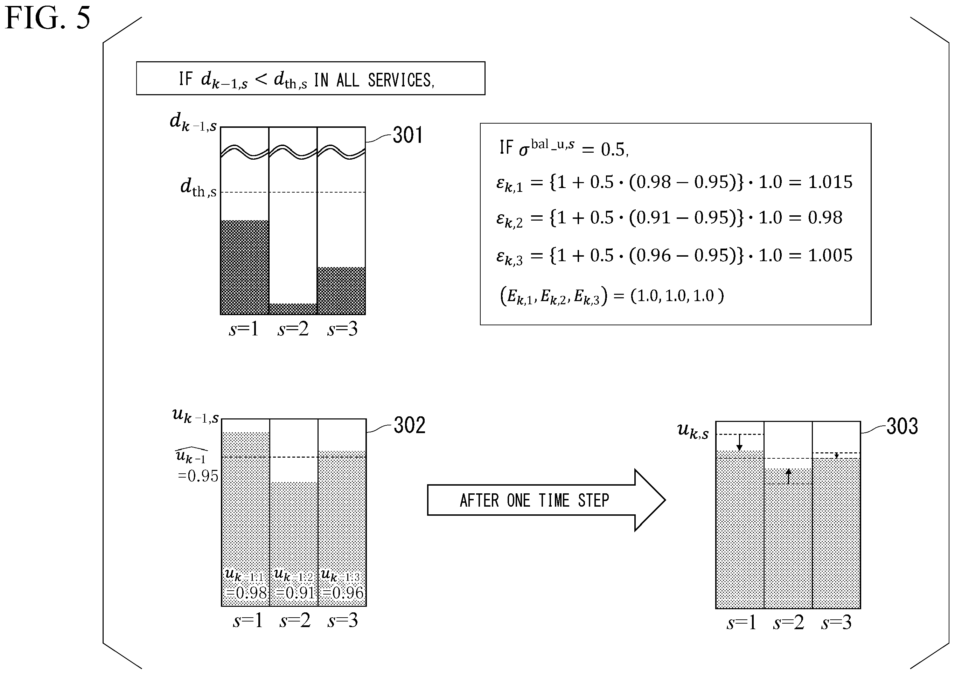

A specific example of resource allocation control according to the embodiment will be described below with reference to FIGS. 5, 6, and 7. FIGS. 5, 6, and 7 are explanatory diagrams illustrating a specific example of the resource allocation control according to the embodiment. Here, for the purpose of convenience of explanation, the threshold value d_th,s of the degree of degradation of communication quality and the threshold value u_th,s of the resource usage rate are the same for all the services s. A moving average values E_k,s of the margin correction factors ε_k,s of the services s (s=1, 2, 3) are all set to "1.0."

(Specific Example 1 of resource allocation control)

Specific Example 1 of resource allocation control when the degrees of degradation of communication quality of all the services s d_k-1,s are less than the threshold value d_th,s is illustrated in FIG. 5. In an explanatory drawing 301 in FIG. 5, the degrees of degradation of communication quality d_k-1,s in all of three services s (s=1, 2, 3) are less than the threshold value d_th,s. Accordingly, the margin correction factor ε_k,s is adjusted according to the difference between the resource usage rate u_k-1,s and the average value u_^_k-1 of the resource usage rate using Expression (4). Specifically, the margin correction factors ε_k,s of the services s (s=1, 2, 3) are acquired as "ε_k,1=1.015," "ε_k,2=0.98," and "ε_k,3=1.005" through Expression (4).

Accordingly, as illustrated in FIG. 5, in two services s (s=1, 3), since the resource usage rate u_k,s is higher than the average value u_^_k-1 of the resource usage rates (see explanatory drawing 302), control is performed such that the margin for the requested amount of resources ω_k,s increases by increasing the margin correction factor ε_k,s. As a result of this control, the resource usage rate u_k,s at time step k after one time step decreases (see explanatory drawing 303). On the other hand, in one service s (s=2), since the resource usage rate u_k,s is lower than the average value u_^_k-1 of the resource usage rates (see explanatory drawing 302), control is performed such that the margin for the requested amount of resources co_k,s decreases by decreasing the margin correction factor ε_k,s. As a result of this control, the resource usage rate u_k,s at time step k after one time step increases (see explanatory drawing 303).

Through this control, as described in explanatory drawings 302 and 303 in FIG. 5, the difference between the resource usage rates of the services decreases at time step k after one time step. Since the margin of resources is divided to all the services s (s=1, 2, 3), it is possible to curb degradation of communication quality in all the services s (s=1, 2, 3).

(Specific Example 2 of resource allocation control)

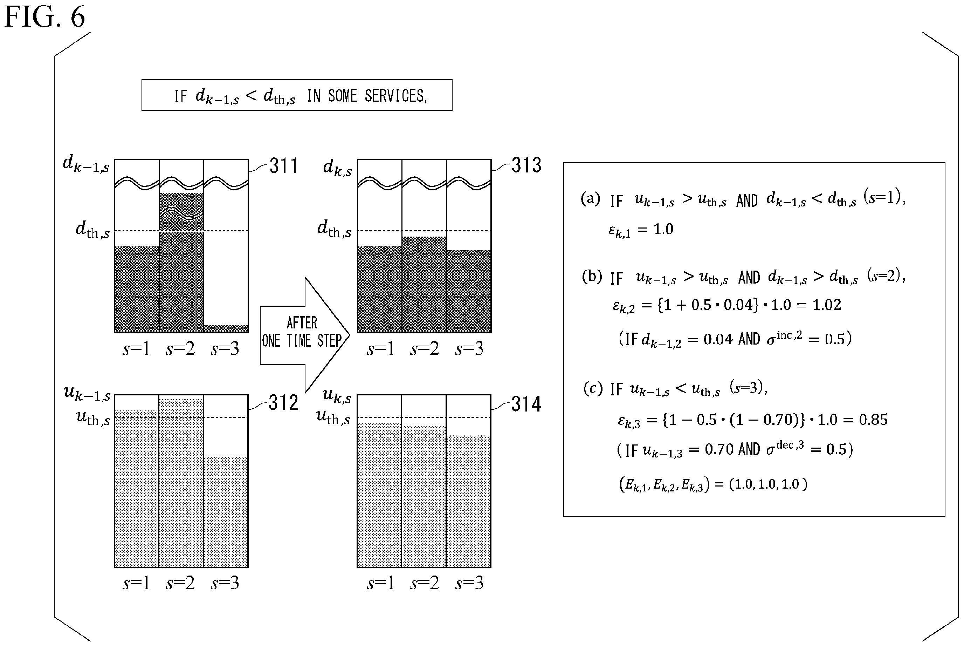

Specific Example 2 of resource allocation control when the degrees of degradation of communication quality of some services s $d\_k-1,s$ are less than the threshold value $d\_th,s$ is illustrated in FIG. 6.

In Explanatory drawings 311 and 312 in FIG. 6, in one service s (s=1), the resource usage rate $u\_k-1,s$ is higher than the threshold value $u\_th,s$ and the degree of degradation of communication quality $d\_k-1,s$ is less than the threshold value $d\_th,s$. Accordingly, in the service s (s=1), since an appropriate margin for the requested amount of resources $\omega\_k-1,s$ is secured, the previous margin correction factor" $\varepsilon\_k-1,1=1.0$" is used as the margin correction factor $\varepsilon\_k,1$ without any change using Expression (5a).

In Explanatory drawings 311 and 312 in FIG. 6, in one service s (s=2), the resource usage rate $u\_k-1,s$ is higher than the threshold value $u\_th,s$ and the degree of degradation of communication quality $d\_k-1,s$ is greater than the threshold value $d\_th,s$. Accordingly, in the service s (s=2), since a margin for the requested amount of resources is deficient, the margin correction factor $\varepsilon\_k,s$ is increased according to the degree of degradation of communication quality $d\_k-1,s$ using Expression (5b) ("$\varepsilon\_k,2=1.02$").

In Explanatory drawings 311 and 312 in FIG. 6, in one service s (s=3), the resource usage rate $u\_k-1,s$ is lower than the threshold value $u\_th,s$. Accordingly, in the service s (s=3), since a margin is secured extra, the margin correction factor $\varepsilon\_k,s$ is decreased according to "$1-u\_k-1,s$" using Expression (5c) ("$\varepsilon\_k,2=0.85$").

Through this control, as described in explanatory drawings 313 and 314 in FIG. 6, unused resources in the service s (s=3) with the low resource usage rate $u\_k-1,s$ are flexibly used in the service s (s=2) with the greater degree of degradation of communication quality $d\_k-1,s$ at time step k after one time step, and thus it is possible to curb degradation of communication quality.

(Specific Example 3 of resource allocation control)

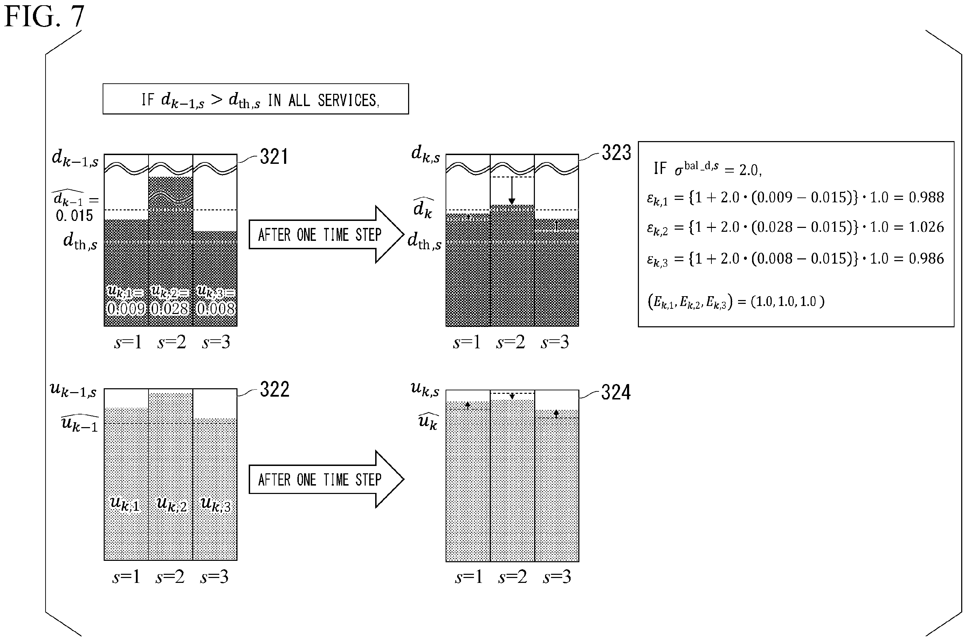

Specific Example 3 of resource allocation control when the degrees of degradation of communication quality of all the services s $d\_k-1,s$ are greater than the threshold value $d\_th,s$ is illustrated in FIG. 7. In an explanatory drawing 321 in FIG. 7, the degrees of degradation of communication quality $d\_k-1,s$ in all of three services s (s=1, 2, 3) are greater than the threshold value $d\_th,s$. Accordingly, the margin correction factor $\varepsilon\_k,s$ is adjusted according to the difference between the degree of degradation of communication quality $d\_k-1,s$ and the average value $d\_\^\_k-1$ of the degrees of degradation of communication quality $d\_k-1,s$ using Expression (6). Specifically, the margin correction factors $\varepsilon\_k,s$ of the services s (s=1, 2, 3) are acquired as "$\varepsilon\_k,1=0.988$," "$\varepsilon\_k,2=1.026$," and "$\varepsilon\_k,3=0.986$" through Expression (6).

Accordingly, as illustrated in FIG. 7, in one service se (s=2), since the degree of degradation of communication quality $d\_k-1,s$ is greater than the average value $d\_\^\_k-1$ of the degrees of degradation of communication quality (see explanatory drawing 321), control is performed such that the margin for the requested amount of resources $\omega\_k,s$ increases by increasing the margin correction factor $\varepsilon\_k,s$. As a result of this control, the degree of degradation of communication quality $d\_k,s$ at time step k after one time step decreases (see explanatory drawing 323). On the other hand, in two services s (s=1, 3), since the degree of degradation of communication quality $d\_k-1,s$ is less than the average value $d\_\^\_k-1$ of the degrees of degradation of communication quality (see explanatory drawing 321), control is performed such that the margin for the requested amount of resources $\omega\_k,s$ decreases by decreasing the margin correction factor $\varepsilon\_k,s$. As a result of this control, the degree of degradation of communication quality $d\_k,s$ at time step k after one time step increases (see explanatory drawing 323).

Through this control, as described in explanatory drawings 321, 322, 323, and 324 in FIG. 7, the resources in the service s (s=1, 3) with the less degree of degradation of communication quality $d\_k-1,s$ are flexibly used in the service s (s=2) with the greater degree of degradation of communication quality $d\_k-1,s$ at time step k after one time step, and thus it is possible to curb degradation of communication quality in the service s (s=2) with the great degree of degradation of communication quality $d\_k-1,s$.

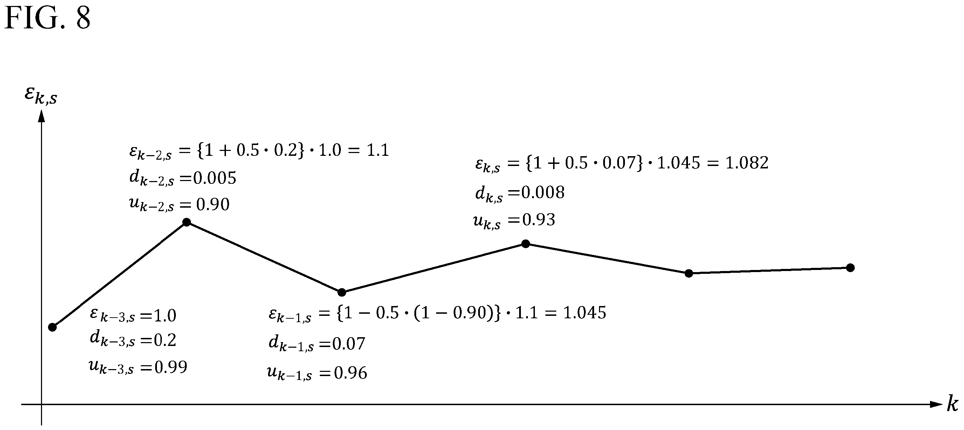

FIG. 8 is a graph illustrating an example of temporal change of the margin correction factor according to the embodiment. By successively performing the feedback control according to the embodiment, the margin correction factor $\varepsilon\_k,s$ is automatically adjusted such that the degree of degradation of communication quality $d\_k,s$ approaches the threshold value $d\_th,s$ and the resource usage rate $u\_k,s$ approaches the threshold value $u\_th,s$ as illustrated in FIG. 8.

In general, since a necessary delay varies between the services s, likeliness of degradation of communication quality due to instantaneous shortage of resources varies between the services. Accordingly, the appropriate margin varies between the services s, but the margin correction factor $\varepsilon\_k,s$ of each service s is automatically adjusted such that an appropriate margin is secured for each service s according to the embodiment. As a result, it is possible to curb degradation of communication quality regardless of communication quality necessary for each service s.

According to the aforementioned embodiment, it is possible to achieve efficient allocation of resources when allocation of resources in a radio access network (RAN 1) for each service accommodated in the radio access network is controlled.

Accordingly, for example, since improvement in overall service quality in a radio access network can be realized, it is possible to contribute to Goal 9 "to organize resilient infrastructure, to promote sustainable industrialization, and to achieve enlargement of innovation" in the sustainable development goals (SDGs) led by the UN.

While an embodiment of the present invention has been described above in detail with reference to the drawings, a specific configuration of the present invention is not limited to the embodiment and includes modifications in design or the like without departing from the gist of the present invention.

A computer program for realizing the functions of the aforementioned devices may be recorded on a computer-readable recording medium, and the program recorded on the recording medium may be read and executed by a computer system. The "computer system" mentioned herein may include an operating system (OS) or hardware such as peripherals.

Examples of the "computer-readable recording medium" include a writable nonvolatile memory such as a flexible disk, a magneto-optical disc, a ROM, or a flash memory, a portable medium such as a digital versatile disc (DVD), and a storage device such as a hard disk incorporated into a computer system.

The "computer-readable recording medium" may include a medium that holds a program for a predetermined time such as a volatile memory (for example, a dynamic random access memory (DRAM)) in a computer system serving as a server or client when a program is transmitted via a network such as the Internet or a communication line such as a telephone line. The program may be transmitted from a computer system storing the program in a storage device or the like to another computer system via a transmission medium or using carrier waves in the transmission medium. The "transmission medium" for transmitting a program is a medium having a function of transmitting information such as a network (a communication network) such as the Internet or a communication circuit (a communication line) such as a telephone circuit.

The program may realize some of the aforementioned functions. The program may be a so-called differential file (a differential program) which can realize the aforementioned functions in combination with another program stored in advance in the computer system.

[Reference Signs List]

1      Radio access network (RAN)
2      Control node (control device)
BS     Base station
RU     Radio unit
UE     User equipment
21     Resource usage rate acquiring unit
22     Total received data volume information acquiring unit
23     Total traffic volume information acquiring unit
24     Communication quality degradation degree calculating unit
25     Control unit
100    Interface

**Claims**

1.  A control device controlling allocation of resources in a radio access network to each of services accommodated in the radio access network, the control device comprising:

    a resource usage rate acquiring unit configured to acquire a resource usage rate indicating a usage rate of the resources for each service;
    a total received data volume information acquiring unit configured to acquire total received data volume information indicating a total received data volume for each service received by user equipment via an interface with a base station;
    a total traffic volume information acquiring unit configured to acquire total traffic volume information indicating a total traffic volume for each service for the user equipment in the base station via the interface with the base station;
    a communication quality degradation degree calculating unit configured to calculate a degree of degradation of communication quality indicating a degree of degradation of a throughput based on a ratio of the total received data volume to the total traffic volume for each service; and

a control unit configured to control a margin for a requested amount of resources on the basis of the resource usage rate and the degree of degradation of communication quality in the past for each service.

2. The control device according to claim 1, wherein the control unit controls the margin for the requested amount of resources for each service such that the margin for the service in which the resource usage rate in the past is low is decreased and the margin for the service in which the degree of degradation of communication quality in the past is high is increased.

3. A resource allocation control method that is performed by a control device controlling allocation of resources in a radio access network to each of services accommodated in the radio access network, the resource allocation control method comprising:

a resource usage rate acquiring step of causing the control device to acquire a resource usage rate indicating a usage rate of the resources for each service;
a total received data volume information acquiring step of causing the control device to acquire total received data volume information indicating a total received data volume for each service received by user equipment via an interface with a base station;
a total traffic volume information acquiring step of causing the control device to acquire total traffic volume information indicating a total traffic volume for each service for the user equipment in the base station via the interface with the base station;
a communication quality degradation degree calculating step of causing the control device to calculate a degree of degradation of communication quality indicating a degree of degradation of a throughput based on a ratio of the total received data volume to the total traffic volume for each service; and
a control step of causing the control device to control a margin for a requested amount of resources on the basis of the resource usage rate and the degree of degradation of communication quality in the past for each service.

4. A computer program causing a computer of a control device controlling allocation of resources in a radio access network to each of services accommodated in the radio access network to perform:

a resource usage rate acquiring step of acquiring a resource usage rate indicating a usage rate of the resources for each service;
a total received data volume information acquiring step of acquiring total received data volume information indicating a total received data volume for each service received by user equipment via an interface with a base station;
a total traffic volume information acquiring step of acquiring total traffic volume information indicating a total traffic volume for each service for the user equipment in the base station via the interface with the base station;
a communication quality degradation degree calculating step of calculating a degree of degradation of communication quality indicating a degree of degradation of a throughput based on a ratio of the total received data volume to the total traffic volume for each service; and
a control step of controlling a margin for a requested amount of resources on the basis of the resource usage rate and the degree of degradation of communication quality in the past for each service.

FIG. 1

# FIG. 2

2

CONTROL NODE

| RESOURCE USAGE RATE ACQUIRING UNIT | ~21 |

| TOTAL RECEIVED DATA VOLUME INFORMATION ACQUIRING UNIT | ~22 |

| TOTAL TRAFFIC VOLUME INFORMATION ACQUIRING UNIT | ~23 |

| COMMUNICATION QUALITY DEGRADATION DEGREE CALCULATING UNIT | ~24 |

| CONTROL UNIT | ~25 |

# FIG. 3

S1

RESOURCE ALLOCATION MODEL

RESOURCE ALLOCATION CONTROL FOR SERVICE

$\varepsilon_{k,s}$

S3

UPDATE OF MARGIN CORRECTION FACTOR

S2

OBSERVED VALUE

$d_{k-1,s}$

$u_{k-1,s}$

# FIG. 4

**DL Successfully Transmitted Data Volume**

a) This measurement provides the Data Volume (amount of RLC SDU bits) <u>successfully transmitted (acknowledged by UEs) in DL during a sampling time window</u>. The measurement is calculated per PLMN ID and per QoS level (mapped 5QI or QCI in NR option 3) and per supported S-NSSAI.  ⟍201

b) CC.

c) This measurement is obtained by counting the number of RLC SDU bits <u>successfully transmitted (acknowledged by UEs) in DL during a sampling time window</u>. The measurement is performed per configured PLMN ID and per QoS level (mapped 5QI or QCI in NR option 3) and per supported S-NSSAI.  ⟍202

d) Each measurement is an integer value representing the number of bits measured in   Mbits (1MBits=1000*1000 bits). The number of measurements is equal to the number of PLMNs multiplied by the number of QoS levels or multiplied by the number of supported   S-NSSAIs.
[Total no. of measurement instances] x [no. of filter values for all measurements] (DL and UL) ≤ 100.

e) The measurement name has the form   QosFlow.PdcpPduVolumeDL_Filter.

f) GNBCUUPFunction.

NRCellCU.

g) Valid for packet switched traffic.

h) 5GS.

i) One usage of this measurement is for performance assurance within integrity area (user plane connection quality).   NRCellCU measurement applies only for 2-split deployment.

# FIG. 5

IF $d_{k-1,s} < d_{\text{th},s}$ IN ALL SERVICES,

IF $\sigma^{\text{bal\_u},s} = 0.5$,

$\varepsilon_{k,1} = \{1 + 0.5 \cdot (0.98 - 0.95)\} \cdot 1.0 = 1.015$

$\varepsilon_{k,2} = \{1 + 0.5 \cdot (0.91 - 0.95)\} \cdot 1.0 = 0.98$

$\varepsilon_{k,3} = \{1 + 0.5 \cdot (0.96 - 0.95)\} \cdot 1.0 = 1.005$

$\left(E_{k,1}, E_{k,2}, E_{k,3}\right) = (1.0, 1.0, 1.0)$

AFTER ONE TIME STEP

$u_{k-1,s}$ ... 302

$\widehat{u_{k-1}} = 0.95$

$u_{k-1,1} = 0.98$  $u_{k-1,2} = 0.91$  $u_{k-1,3} = 0.96$

$s=1$  $s=2$  $s=3$

$u_{k,s}$ ... 303

$s=1$  $s=2$  $s=3$

# FIG. 6

IF $d_{k-1,s} < d_{\text{th},s}$ IN SOME SERVICES,

$d_{k-1,s}$ ⌇⌇ 311   $s=1$  $s=2$  $s=3$

$d_{\text{th},s}$

AFTER ONE TIME STEP

$d_{k,s}$ ⌇⌇ 313   $s=1$  $s=2$  $s=3$

$d_{\text{th},s}$

$u_{k-1,s}$ / $u_{\text{th},s}$  312   $s=1$  $s=2$  $s=3$

$u_{k,s}$ / $u_{\text{th},s}$  314   $s=1$  $s=2$  $s=3$

(a) IF $u_{k-1,s} > u_{\text{th},s}$ AND $d_{k-1,s} < d_{\text{th},s}$ ($s=1$),

$\varepsilon_{k,1} = 1.0$

(b) IF $u_{k-1,s} > u_{\text{th},s}$ AND $d_{k-1,s} > d_{\text{th},s}$ ($s=2$),

$\varepsilon_{k,2} = \{1 + 0.5 \cdot 0.04\} \cdot 1.0 = 1.02$

(IF $d_{k-1,2} = 0.04$ AND $\sigma^{\text{inc},2} = 0.5$)

(c) IF $u_{k-1,s} < u_{\text{th},s}$ ($s=3$),

$\varepsilon_{k,3} = \{1 - 0.5 \cdot (1 - 0.70)\} \cdot 1.0 = 0.85$

(IF $u_{k-1,3} = 0.70$ AND $\sigma^{\text{dec},3} = 0.5$)

$(E_{k,1}, E_{k,2}, E_{k,3}) = (1.0, 1.0, 1.0)$

EP 4 340 445 A1

## FIG. 7

EP 4 340 445 A1

IF $d_{k-1,s} > d_{\text{th},s}$ IN ALL SERVICES,

321

$d_{k-1,s}$

$\widehat{d_{k-1}} = 0.015$

$d_{\text{th},s}$

$u_{k,1} = 0.009$  $u_{k,2} = 0.028$  $u_{k,3} = 0.008$

$s=1$  $s=2$  $s=3$

AFTER ONE TIME STEP

323

$d_{k,s}$

$\widehat{d_k}$

$d_{\text{th},s}$

$s=1$  $s=2$  $s=3$

IF $\sigma^{\text{bal\_d},s} = 2.0$,

$\varepsilon_{k,1} = \{1 + 2.0 \cdot (0.009 - 0.015)\} \cdot 1.0 = 0.988$

$\varepsilon_{k,2} = \{1 + 2.0 \cdot (0.028 - 0.015)\} \cdot 1.0 = 1.026$

$\varepsilon_{k,3} = \{1 + 2.0 \cdot (0.008 - 0.015)\} \cdot 1.0 = 0.986$

$\left(E_{k,1}, E_{k,2}, E_{k,3}\right) = (1.0, 1.0, 1.0)$

322

$u_{k-1,s}$

$\widehat{u_{k-1}}$

$u_{k,1}$  $u_{k,2}$  $u_{k,3}$

$s=1$  $s=2$  $s=3$

AFTER ONE TIME STEP

324

$u_{k,s}$

$\widehat{u_k}$

$s=1$  $s=2$  $s=3$

FIG. 8

$\varepsilon_{k,s}$

$\varepsilon_{k-2,s} = \{1 + 0.5 \cdot 0.2\} \cdot 1.0 = 1.1$
$d_{k-2,s} = 0.005$
$u_{k-2,s} = 0.90$

$\varepsilon_{k,s} = \{1 + 0.5 \cdot 0.07\} \cdot 1.045 = 1.082$
$d_{k,s} = 0.008$
$u_{k,s} = 0.93$

$\varepsilon_{k-3,s} = 1.0$
$d_{k-3,s} = 0.2$
$u_{k-3,s} = 0.99$

$\varepsilon_{k-1,s} = \{1 - 0.5 \cdot (1 - 0.90)\} \cdot 1.1 = 1.045$
$d_{k-1,s} = 0.07$
$u_{k-1,s} = 0.96$

$k$

## INTERNATIONAL SEARCH REPORT

| International application No. |
|---|
| **PCT/JP2022/003872** |

**A. CLASSIFICATION OF SUBJECT MATTER**

*H04W 28/26*(2009.01)i; *H04W 88/18*(2009.01)i; *H04L 47/80*(2022.01)i
FI: H04W28/26; H04W88/18; H04L47/80

According to International Patent Classification (IPC) or to both national classification and IPC

**B. FIELDS SEARCHED**

Minimum documentation searched (classification system followed by classification symbols)

H04W28/26; H04W88/18; H04L47/80

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | US 2013/0136101 A1 (GUO, Xin) 30 May 2013 (2013-05-30) paragraphs [0039]-[0046], fig. 2, 19 | 1-4 |
| Y | JP 2017-200172 A (TOSHIBA CORP.) 02 November 2017 (2017-11-02) paragraphs [0025], [0034], [0043]-[0046] | 1-4 |
| Y | WO 2005/034545 A1 (MITSUBISHI DENKI KK) 14 April 2005 (2005-04-14) page 2, lines 13-17, fig. 13 | 1-4 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/003872**

| Patent document cited in search report | | | Publication date (day/month/year) | Patent family member(s) | | | Publication date (day/month/year) |
|---|---|---|---|---|---|---|---|
| US | 2013/0136101 | A1 | 30 May 2013 | WO 2012/041160 A1 paragraphs [39]-[46], fig. 2, 19 CN 102448126 A | | | |
| JP | 2017-200172 | A | 02 November 2017 | US 2017/0318468 A1 paragraphs [0035]-[0039], [0053], [0070]-[0076] | | | |
| WO | 2005/034545 | A1 | 14 April 2005 | US 2006/0189334 A1 paragraph [0009], fig. 13 EP 1670266 A1 CN 1839641 A | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021080489 A

### Non-patent literature cited in the description

- Fulfillment of Service Level Agreements via Slice-Aware Radio Resource Management in 5G Networks. **B. KHODAPANAH ; A. AWADA ; I. VIERING ; D. OEHMANN ; MERYEM SIMSEK ; G. P. FETTWEIS.** 2018 IEEE 87th Vehicular Technology Conference. VTC Spring, June 2018, 1-6

- *3GPP, "TS 28.552," V17.1.0,* December 2020